# DEMANDE DE BREVET EUROPEEN

(11) **EP 4 760 372 A1**
(43) Date de publication de la demande: **17.06.2026**
(21) Numéro de dépôt: 25222671.7
(22) Date de dépôt: 11.12.2025
(51) Int. Cl.: G02B 27/01

(54) **DISPOSITIF DE DOUBLE VISION ET PROCÉDÉ ASSOCIÉ**

(30) Priorité: 13.12.2024 FR 2414125
(71) Demandeur: Pltech, 94340 Joinville Le Pont (FR)
(72) Inventeur: LIGNON, Patrick, 83310 GRIMAUD (FR)
(74) Mandataire: Lavoix

(57) **Abrégé**

La présente invention concerne un dispositif de double vision (10) propre à générer, en plus de la vision directe d'un utilisateur (18), une seconde vision, indépendante de la vision directe et située en partie supérieure du champ de vision de l'utilisateur (18), le dispositif comprenant un ensemble d'affichage (14) porté par un support (12), l'ensemble d'affichage comprenant deux unités d'affichage (32) propres à générer la seconde vision en partie supérieure du champ de vision de l'utilisateur, chaque unité d'affichage (32) comprenant un oculaire (36) et un écran (38) choisis de sorte que chaque unité d'affichage (32) forme une image visualisable de manière nette par un œil distinct de l'utilisateur (18) dans les conditions suivantes :
• le support (12) est incliné tel que l'image formée par chaque unité d'affichage (32) soit visualisable seulement en partie supérieure du champ de vision de l'utilisateur (18) lorsque l'utilisateur lève les yeux, et
• la distance entre les yeux de l'utilisateur (18) et l'entrée des oculaires (36) est supérieure ou égale à une distance prédéterminée, la distance prédéterminée étant choisie pour permettre l'insertion de lunettes entre les yeux de l'utilisateur et l'unité d'affichage.

## Description

La présente invention concerne un dispositif de double vision propre à générer, en plus de la vision directe d'un utilisateur, une seconde vision, indépendante de la vision directe. L'invention concerne également un procédé de génération de la seconde vision.

L'émergence des dispositifs de réalité augmenté a mis en évidence la possibilité pour un utilisateur de disposer d'informations visuelles annexes à celles fournies par la vision directe, dite également vision naturelle. De telles informations peuvent présenter un gain de productivité au niveau industriel, en représentant des plans ou des notes techniques par exemple, mais peuvent aussi être utiles à des fins de visio-partage ou divertissement.

Les dispositifs superposant des images à la vue directe présentent l'inconvénient de ne pas pouvoir afficher de manière lisible une image pleine, du fait notamment de la luminosité environnante. Une image pleine est une image de forme rectangulaire dans laquelle chaque pixel dispose d'une opacité non nulle.

On connait des dispositifs monoculaires disposant d'un écran, qui sont à placer en face d'un œil, permettant ainsi d'accéder à des informations visuelles additionnelles avec cet œil et à une vision directe avec l'autre œil. Néanmoins, la majorité des utilisateurs de dispositifs monoculaires doivent fermer un œil et conserver l'autre ouvert pour alterner entre la vision directe et les informations visuelles additionnelles, ce qui est inconfortable, fatiguant, et requiert un temps d'adaptation lors du passage d'une vision à l'autre.

Il existe également des lunettes munies d'écrans qui affichent du contenu vidéo. Cependant celles-ci sont généralement situées proches des yeux de l'utilisateur, ce qui rend incompatible l'utilisation du dispositif avec le port de lunettes par exemple. Or, afin de fournir des informations visuelles additionnelles nettes au plus grand nombre d'utilisateur, il est utile que le dispositif soit utilisable conjointement avec des lunettes de vue.

Le but de l'invention est alors de proposer un dispositif de double vision permettant à un utilisateur de passer de la vision directe à des informations visuelles additionnelles simplement, et de manière plus confortable, tout en assurant que le dispositif de double vision est adapté pour un utilisateur porteur de lunettes de vue.

A cet effet, l'invention a pour objet un dispositif de double vision propre à générer, en plus de la vision directe d'un utilisateur, une seconde vision, indépendante de la vision directe, la seconde vision étant située en partie supérieure du champ de vision de l'utilisateur de sorte que l'utilisateur ait accès à la seconde vision seulement en levant les yeux, et ait accès à sa vision directe sinon, le dispositif comprenant :
- un support pour un ensemble d'affichage,
- une unité de réglage propre à fixer et adapter le support à la tête de l'utilisateur de sorte que l'ensemble d'affichage porté par le support soit visualisable seulement en partie supérieure du champ de vision de l'utilisateur lorsque l'utilisateur lève les yeux,
- l'ensemble d'affichage porté par le support, l'ensemble d'affichage comprenant deux unités d'affichage propres à générer la seconde vision en partie supérieure du champ de vision de l'utilisateur, chaque unité d'affichage comprenant un oculaire et un écran qui sont choisis de sorte que chaque unité d'affichage forme une image visualisable de manière nette par un œil distinct de l'utilisateur dans les conditions suivantes :
   - le support est incliné tel que l'image formée par chaque unité d'affichage soit visualisable seulement en partie supérieure du champ de vision de l'utilisateur lorsque l'utilisateur lève les yeux, et
   - la distance entre les yeux de l'utilisateur et l'entrée des oculaires est supérieure ou égale à une distance prédéterminée, la distance prédéterminée étant choisie pour permettre l'insertion de lunettes entre les yeux de l'utilisateur et l'unité d'affichage.

Suivant d'autres aspects avantageux de l'invention, le dispositif de double vision comprend une ou plusieurs des caractéristiques suivantes, prises isolément ou suivant toutes les combinaisons techniquement possibles :
- la distance prédéterminée est comprise est comprise entre 20 millimètres et 28 millimètres, de préférence entre 22 millimètres et 25 millimètres ;
- l'écran de chaque unité d'affichage présente une taille choisie de sorte que l'image formée par l'unité d'affichage soit lisible sans que l'utilisateur ait à bouger les yeux en latéral pour visualiser les bords de l'image ;
- chaque oculaire est formé d'un ensemble de lentilles accolées, de préférence aux moins quatre lentilles accolées, la surface de la lentille en entrée de l'oculaire étant sensiblement plane ;
- chaque unité d'affichage comprend une armature dans laquelle sont insérés l'écran et l'oculaire, l'armature présentant une forme parallélépipédique avec une base conique en entrée de l'oculaire ;
- chaque unité d'affichage comprend une armature dans laquelle sont insérés l'écran et l'oculaire, l'armature présentant une bordure, en entrée de l'oculaire, dont l'épaisseur est inférieure ou égale à 2 millimètres, notamment inférieure ou égale à 1,4 millimètres ;
- chaque unité d'affichage comprend une armature dans laquelle sont insérés l'écran et l'oculaire, l'armature présentant un mécanisme de réglage dioptrique permettant à l'utilisateur d'adapter la mise au point de chaque unité d'affichage ;
- le support comprend une plaque de fermeture avec deux logements dans lesquels sont reçus les unités d'affichage, l'ensemble d'affichage comprenant un mécanisme de réglage interpupillaire monté sur la plaque de fermeture et propre à synchroniser le déplacement des deux unités d'affichages, le mécanisme de réglage interpupillaire comprenant un palonnier sur lequel sont montées deux biellettes et une molette de verrouillage de la rotation du palonnier, chaque biellette étant fixée à une unité d'affichage distincte permettant le déplacement synchrone de chaque unité d'affichage lorsque la molette de verrouillage est en position déverrouillée ;
- les deux unités d'affichages comprennent également pour chaque logement deux languettes de part et d'autre de la plaque de fermeture propres à couvrir l'espace induit par le réglage interpupillaire de sorte à éviter l'entrée de lumière et de poussière ;
- l'unité d'affichage comprend une portion interne à l'intérieur du support et une portion saillante s'étendant en saillie du support, et dans lequel l'écran est reçu dans la portion interne, l'oculaire étant reçu dans la portion saillante ;
- la portion saillante de l'unité d'affichage présente une épaisseur inférieure ou égale à 4 millimètres.

L'invention concerne également un procédé de génération d'une vision, indépendante de la vision directe d'un utilisateur, la seconde vision étant située en partie supérieure du champ de vision de l'utilisateur de sorte que l'utilisateur ait accès à la seconde vision seulement en levant les yeux, et ait accès à sa vision directe sinon, le procédé étant mis en œuvre par un dispositif de double vision tel que décrit précédemment, le procédé comprenant les étapes suivantes :
- la fixation et l'adaptation du support du dispositif de double vision à la tête de l'utilisateur de sorte que l'ensemble d'affichage porté par le support soit visualisable seulement en partie supérieure du champ de vision de l'utilisateur lorsque l'utilisateur lève les yeux, et
- la visualisation par l'utilisateur de la seconde vision fournie par le dispositif de double vision en partie supérieure du champ de vision de l'utilisateur lorsque l'utilisateur lève les yeux, et de sa vision directe sinon.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique d'un exemple d'un dispositif de double vision selon l'invention,
[Fig. 2] la figure 2 est une représentation schématique en perspective d'un utilisateur qui porte un exemple de dispositif de double vision,
[Fig. 3] la figure 3 est une vue de profil de l'utilisateur et du dispositif de double vision de la figure 2,
[Fig. 4] la figure 4 est une vue de dessous de l'utilisateur et du dispositif de double vision de la figure 2,
[Fig. 5] la figure 5 est une vue en éclatée d'un exemple d'un dispositif de double vision,
[Fig. 6] la figure 6 est une vue en éclatée d'un exemple d'une unité d'affichage d'un dispositif de double vision,
[Fig. 7] la figure 7 est une vue en coupe des unités d'affichages et de leur fixation sur un support du dispositif représenté sur la figure 2,
[Fig 8] la figure 8 est une vue de dessous des unités d'affichages et de leur fixation sur un support du dispositif représenté sur la figure 2, et
[Fig 9] la figure 9 est une représentation schématique d'un dispositif de double vision selon un deuxième exemple.

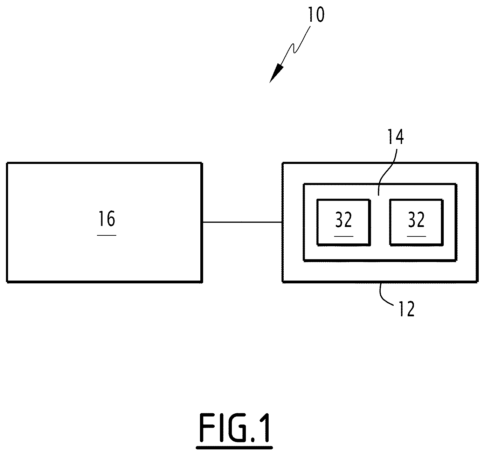

Un exemple de dispositif de double vision 10 est illustré schématiquement sur la figure 1.

Un tel dispositif 10 comprend un support 12 pour un ensemble d'affichage 14, l'ensemble d'affichage 14 en elle-même, et une unité de réglage 16, propre à adapter et fixer le support 12 à la tête d'un utilisateur 18.

Le dispositif 10 est propre à générer une seconde vision, indépendante de la vision naturelle de l'utilisateur 18, destinée à afficher des informations visuelles supplémentaires par rapport à la vision directe. La seconde vision est propre à être générée par l'intermédiaire de l'ensemble d'affichage 14, en partie supérieure du champ de vision de l'utilisateur 18. L'utilisateur a, ainsi, accès à la seconde vision seulement en levant les yeux, et a accès à sa vision directe sinon.

Pour cela, comme cela sera décrit plus tard dans la description, l'unité de réglage 16 est notamment adaptée pour positionner le support 12 par rapport à la tête de l'utilisateur de sorte que l'ensemble d'affichage 14 soit visualisable en partie supérieure du champ de vision de l'utilisateur 18 lorsque l'utilisateur lève les yeux.

On définit un repère sphérique centré en un point virtuel situé entre les points focaux des deux yeux de l'utilisateur 18. La latitude et la longitude d'un point de l'espace sont définis en référence au repère sphérique. La latitude est définie comme étant nulle à l'horizon, positive au-dessus de la tête de l'utilisateur et négative au niveau des pieds de l'utilisateur 18.

Le champ de vision d'un utilisateur est défini comme étant l'étendue de l'espace que l'utilisateur peut balayer du regard, en étant immobile. Le champ de vision supérieure est défini comme étant la portion du champ de vision que voit l'utilisateur en levant les yeux. Plus particulièrement, on considère le champ de vision supérieur comme étant l'ensemble des points de latitude positive supérieure à 10° compris dans le champ de vision de l'utilisateur 18.

Le support 12 porte l'ensemble d'affichage 14.

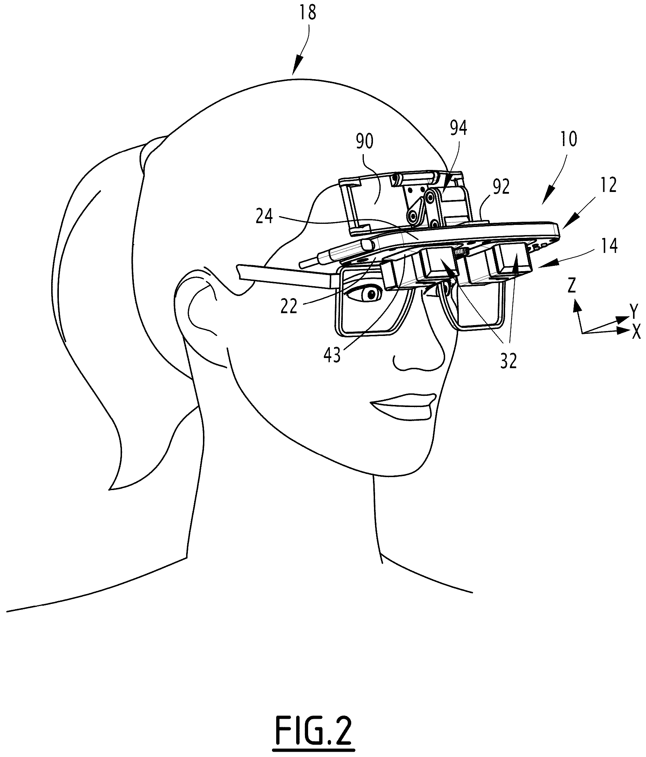

En référence à la figure 2, le support 12 s'étend principalement en longueur selon une direction latérale X, en largeur selon une direction transversale Y et en épaisseur selon une direction d'élévation Z. Quand le support 12 est positionné de sorte que l'ensemble d'affichage soit visualisable en partie supérieure du champ de vision de l'utilisateur 18, la direction latérale X est sensiblement parallèle à l'axe reliant les points focaux des yeux de l'utilisateur 18.

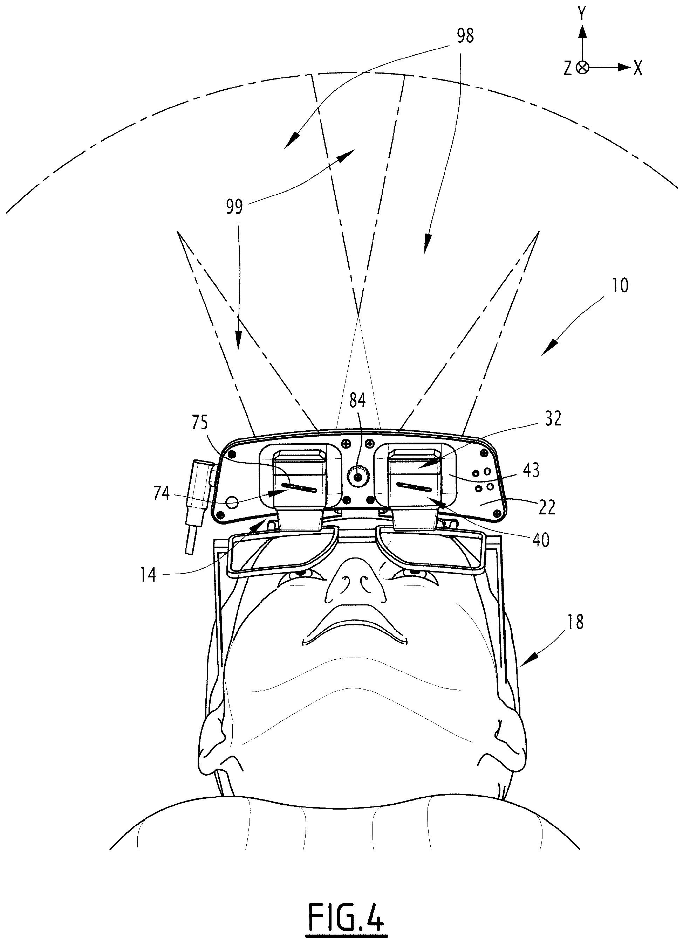

Le support 12 présente par exemple une forme sensiblement polyédrique, certaines faces pouvant être incurvées, tel que représenté sur la figure 4. En variante, le support 12 possède une forme géométrique quelconque s'étendant principalement selon la direction latérale X.

Le support est, par exemple, réalisé dans un d'un matériau comprenant du carbone, par exemple un matériau composite renforcé en fibre de carbone.

De préférence, tel qu'illustré sur les exemples des figures 2 à 5, le support 12 comporte une plaque supérieure 20 et une plaque de fermeture 22 liées l'une à l'autre par une paroi 24. Le support définit, ainsi, un volume interne dans lequel est reçu, par exemple, une carte électronique 28. La carte électronique 28 définit un système de lecture de données, et dispose avantageusement d'une connectique de lecture de données vidéos. Le système de lecture de données est destiné à commander l'ensemble d'affichage 14 pour afficher les données reçues. En variante, la carte électronique 28 reçoit les données vidéos sans connectique filaire, par exemple par l'intermédiaire d'une antenne.

La plaque supérieure 20 s'étend dans un plan engendré par la direction latérale X et la direction transversale Y, orthogonale à la direction latérale X. La paroi 24 s'étend selon la direction d'élévation Z orthogonale au plan de la plaque supérieure 20.

Avantageusement, la plaque de fermeture 22 dispose de deux logements 29 décalés l'un par rapport à l'autre selon la direction latérale X, ouvrant le volume interne sur l'extérieur du support 12.

De préférence, la plaque de fermeture 22 dispose d'une épaisseur, prise selon la direction d'élévation Z, inférieure ou égale 1,5 mm, de préférence égale à 0,9 millimètres.

L'ensemble d'affichage 14 est propre à afficher des images visibles par l'utilisateur en partie supérieure de son champ de vision, lorsque l'utilisateur lève les yeux.

L'ensemble d'affichage 14 comprend deux unités d'affichage 32.

Comme illustré sur les exemples des figures 2 à 4, les deux unités d'affichage 32 sont décalées l'une de l'autre selon la direction latérale X. Les unités d'affichage 32 sont alignés selon les directions transversale Y et d'élévation Z, c'est-à-dire que les unités d'affichage 32 affleurent sur un plan orthogonal à la direction transversale Y et/ou les unités d'affichage 32 affleurent sur un plan orthogonal à la direction d'élévation Z.

Chaque unité d'affichage 32 comprend un oculaire 36 et un écran 38 qui sont choisis de sorte que chaque unité d'affichage 32 forme une image visualisable de manière nette par un œil distinct de l'utilisateur dans les conditions suivantes :
- le support 12 est incliné tel que l'image formée par chaque unité d'affichage 32 soit visualisable seulement en partie supérieure du champ de vision de l'utilisateur lorsque l'utilisateur lève les yeux, et
- la distance entre les yeux de l'utilisateur et l'entrée des oculaires 36 est supérieure ou égale à une distance prédéterminée, la distance prédéterminée étant choisie pour permettre l'insertion de lunettes entre les yeux de l'utilisateur et l'unité d'affichage 32.

Les deux unités d'affichage 32 sont donc destinées à être placées en face des yeux de l'utilisateur 18 afin d'y restituer une image nette à une distance supérieure ou égale à la distance prédéterminée.

La distance prédéterminée est une distance qui ménage assez d'espace entre une entrée 33 des unités d'affichage 32 et les yeux de l'utilisateur 18 pour y insérer des lunettes, rendant le dispositif de double vision 10 utilisable par une majorité d'utilisateurs. Par exemple, la distance prédéterminée est comprise entre 20 millimètres et 25 millimètres, notamment comprise entre 22 millimètres et 25 millimètres.

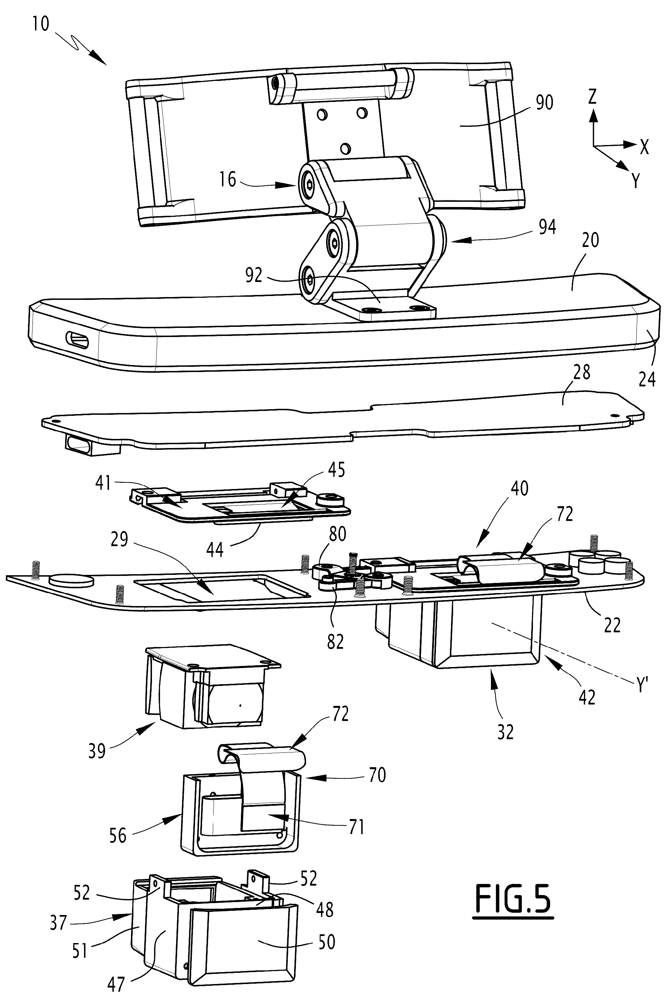

La figure 5 présente une vue en éclatée d'un exemple d'un dispositif de double vision 10, dans laquelle on distingue le support 12 et l'ensemble d'affichage 14 qui comprend les deux unités d'affichage 32.

De préférence, les unités d'affichage 32 s'étendent au moins partiellement en saillie du support 12, dans l'exemple représenté, de la plaque de fermeture 22.

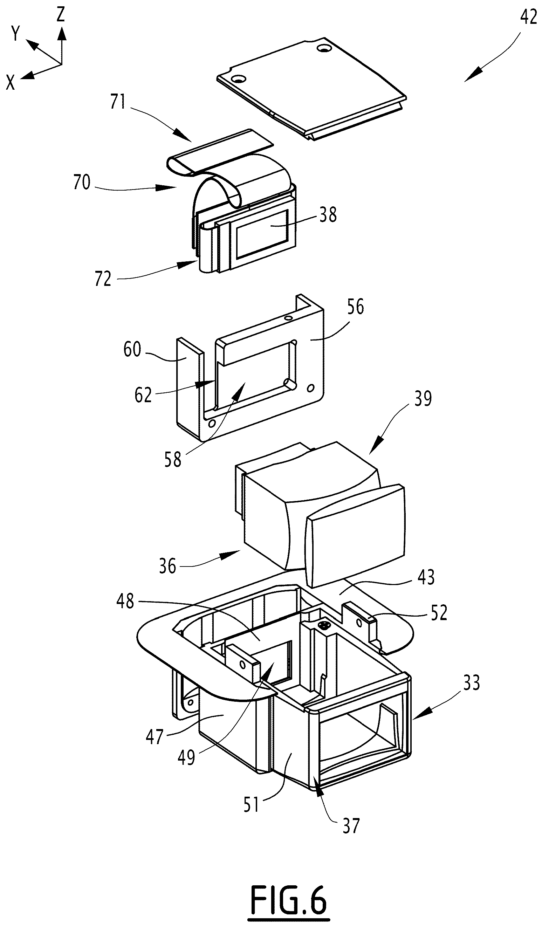

Dans les exemples des figures 5 et 6, l'oculaire 36 est placé entre l'entrée 33 de l'unité d'affichage 32 et l'écran 38 selon la direction transversale Y.

L'oculaire 36 est de préférence formé d'un ensemble de lentilles 39 accolées, par exemple de quatre lentilles. La figure 6 illustre un ensemble de lentilles 39 comprenant quatre lentilles dont deux sont collée entre elles. La surface de la lentille la plus proche, selon la direction transversale Y, de l'entrée de l'unité d'affichage 32 est de préférence sensiblement plane, ce qui réduit les reflets potentiellement générés par une source de lumière extérieure. En variante, l'oculaire 36 comprend un nombre de lentilles inférieur à quatre ou supérieur à quatre.

L'écran 38 est adapté pour afficher une image visualisable par l'utilisateur 18 au travers de l'oculaire 36.

Avantageusement, l'écran 38 est optimisé de sorte que l'image formée par l'unité d'affichage 32 soit la plus large possible tout en étant lisible sans que l'utilisateur ait à bouger les yeux pour visualiser les bords de l'image, en particulier les bords latéraux au sens de la direction latérale X.

Par exemple, l'écran 38 présente une résolution qui est au moins en haute définition, c'est-à-dire que l'écran 38 présente une résolution, prise selon la direction latérale X, supérieure ou égale à 1920 pixels. Une telle résolution est dimensionnée pour permettre à l'utilisateur de visualiser notamment des caractères qui seraient affichés sur l'écran 38 de manière nette.

En variante ou complément, l'écran 38 de chaque unité d'affichage 32 présente une forme de rectangle dont la diagonale est inférieure ou égale à 10 millimètres, de préférence inférieure ou égale à 8 millimètres.

De préférence, l'écran 38 est un écran OLED (organic light-emitting diode en anglais, diode électroluminescente organique en français).

Dans un exemple de mise en œuvre, tel qu'illustré par la figure 5, chaque unité d'affichage 32 comprend une armature 40 dans laquelle sont insérés l'oculaire 36 et l'écran 38.

De préférence, l'armature 40 présente une forme parallélépipédique avec une base conique en entrée de l'oculaire 36. Cela permet de limiter la bordure 37 autour du verre de façade faisant partie de l'oculaire 36.

En complément facultatif ou en variante, la bordure 37 présente une épaisseur autour de l'entrée de l'oculaire 36 inférieure ou égale à 2 millimètres, notamment inférieure ou égale à 1,4 millimètres. L'épaisseur de la bordure 37 se mesure selon la direction tangente au contour de l'entrée de l'oculaire 26. La faible épaisseur de la bordure 37 sur le pourtour de l'oculaire 36 permet d'éviter la formation de bandes noires autour de l'image que l'utilisateur 18 est destiné à visualiser via la seconde vision en levant les yeux.

Dans un exemple de réalisation, représenté sur la figure 6, l'entrée de l'oculaire 36 est sensiblement comprise dans un plan engendré par la direction latérale X et la direction d'élévation Z. L'épaisseur de la bordure 37 de l'armature 40 se mesure alors selon la direction latérale X et la direction d'élévation Z.

De préférence, comme illustré par la figure 5, l'armature 40 comprend une languette supérieure 41, située dans le volume interne du support 12, et une partie inférieure 42 située en saillie de la plaque de fermeture 22 à l'extérieur du support 12. La languette supérieure 41 et la partie inférieure 42 d'une unité d'affichage 32 sont fixées entre elles de part et d'autre d'un logement 29. La partie inférieure 42 dispose avantageusement d'une languette inférieure 43, dont les dimensions selon la direction latérale X et la direction transversale Y sont supérieures à celle du logement 29, de sorte à recouvrir le logement 29. La languette supérieure 41 et la languette inférieure 43 sont en appui de part et d'autre de la plaque de fermeture 22 du support 12. La languette supérieure 41 et la languette inférieure 43 sont destinées à assurer l'étanchéité à la lumière et à la poussière du support 12 au niveau des logements 29. A cette fin, la languette inférieure 43 présente une forme évasée, c'est-à-dire que sa section, prise selon les directions latérale X et transversale Y, s'élargit à proximité de la plaque de fermeture 22. De préférence, les dimensions selon la direction latérale X et la direction transversale Y de la languette inférieure 43 sont sensiblement égales aux dimensions de la languette supérieure 30.

Dans cet exemple, la languette supérieure 41 présente une forme de plaque sensiblement rectangulaire s'étendant principalement selon un plan parallèle au plan de la plaque de fermeture 22 et dont les dimensions prises selon la direction transversale Y et la direction latérale X sont supérieures aux dimensions du logement 29, prises selon la direction transversale Y et la direction latérale X.

Dans cet exemple, la languette supérieure 41 dispose d'une surface protubérante 44, qui s'étend selon la direction d'élévation Z. La surface protubérante 44 s'étend selon la direction transversale Y, sur toute la longueur du logement 29, et s'étend selon la direction latérale X sur une longueur inférieure à celle du logement 29. La surface protubérante 44 coopère ainsi avec le logement 29, de sorte à réaliser une liaison glissière selon la direction latérale X. La languette supérieure 41 est guidée en translation par rapport à la plaque de fermeture 22 selon la direction latérale X. De préférence, les dimensions selon la direction latérale X et la direction transversale Y de la languette inférieure 43 sont égales aux dimensions de la languette supérieure 30.

Une ouverture 45 est ménagée dans la languette supérieure 41, l'ouverture 45 étant placée en regard du logement 29 selon la direction d'élévation Z.

Un exemple de partie inférieure 42 d'une unité d'affichage 32 est représenté sur la figure 6. La partie inférieure 42 reçoit notamment l'écran 38 et l'oculaire 36 et comprend l'entrée 33 de l'unité d'affichage 32.

La partie inférieure 42 présente une forme parallélépipédique avec une base conique en entrée de l'oculaire 38. Avantageusement, l'entrée de l'oculaire 36 forme l'entrée 33 de l'unité d'affichage 32.

Dans l'exemple de la figure 6, la partie inférieure 42 comprend une paroi de support 46 orthogonale à la direction d'élévation Z, des parois latérales 47 orthogonales à la direction latérale X, et une paroi intermédiaire 48 dans laquelle est ménagée un cadre 49.

De préférence, le cadre 49 est réalisé en un matériau qui laisse passer au moins une partie du rayonnement visible, par exemple en polyméthacrylate de méthyle (ou PMMA, commercialisé sous le nom plexiglas). En variante le cadre 49 est une simple ouverture ménagée dans la paroi intermédiaire 48. Le cadre 49 est destiné à laisser passer le rayonnement, depuis l'écran 38 vers l'entrée 33 de l'unité d'affichage 32.

Dans un exemple de réalisation, la partie inférieure 42 comprend en outre une paroi de fond 45, décalée par rapport à la paroi intermédiaire 48 selon la direction transversale Y. Les parois latérales 47 et la paroi de fond 50 sont liées entre elle par la languette inférieure 43 qui s'étend en saillie à partir de l'extrémité supérieure, prise selon la direction d'élévation Z, des parois latérales 47 et de la paroi de fond 50. Un espace est formé entre la paroi de fond 50 et la paroi intermédiaire 48. Des protubérances 52 s'étendent à partir des parois latérales 47, et sont destinées à être fixées à la languette supérieure 41, par des moyens de fixation.

Dans cet exemple, l'armature 40 comprend également un boîtier 51 pour recevoir et fixer l'oculaire 36. Le boîtier 51 est de forme parallélépipédique et est reçu dans la partie inférieure 42. Le boîtier 51 a deux faces orthogonales à la direction transversale Y, les deux faces étant ouverte de sorte à laisser passer la lumière sur toute la longueur transversale du boîtier 51. Le boitier 51 dispose, à son extrémité transversale la plus éloignée de la paroi de fond 50, une forme conique, qui confère à l'unité d'affichage 32 sa forme conique.

Dans cet exemple, l'écran 38 est reçu dans un radiateur 56 de la partie inférieure 42, le radiateur 56 étant disposé entre la paroi de fond 50 et la paroi intermédiaire 48. Le radiateur 56 est avantageusement dimensionné pour combler l'espace formé entre la paroi de fond 50 et la paroi intermédiaire 48. Le radiateur 56 dispose en outre de moyens de fixation permettant de le rendre solidaire de la languette supérieure 41.

De préférence, la radiateur 56 est réalisé en un matériau conducteur thermique, par exemple en aluminium ou en cuivre, pour dissiper la chaleur émise par l'écran 38.

Dans cet exemple, le radiateur 56 est une plaque dans laquelle est ménagée un logement de réception 58 dans lequel l'écran 38 est reçu. Le logement de réception 58 s'étend dans un plan orthogonal à la direction transversale Y. Le radiateur 56 est en contact, du côté opposé au logement de réception 58, avec la paroi de fond 50 via des entretoises 60. Les entretoises 60 ménagent un espace entre la paroi de fond 50 et le radiateur 56. Le radiateur dispose en outre d'une ouverture traversante 62, traversant le radiateur selon la direction transversale Y.

Dans cet exemple, l'écran 38 est solidaire d'une bande 70 enroulée qui s'étend en depuis un bord latéral de l'écran 38. La bande 70 dispose d'une première portion 71 comprenant des enroulements selon la direction d'élévation Z et d'une deuxième portion 72 dans laquelle les enroulements sont orientés selon la direction latérale X. La bande 70 est située au travers de l'ouverture traversante 62, de sorte à s'étendre dans l'espace entre la paroi de fond 50 et le radiateur 56. La deuxième portion 72 de la bande 70 passe au travers de l'ouverture 45 de la languette supérieure 41, elle est située au moins partiellement dans le volume interne du support 12. La bande 70 est notamment destinée à assurer la connexion électrique entre la carte électronique 28 et l'écran 38. La bande 70 est par exemple constituée d'une nappe de câbles pour raccorder l'écran 38 à la carte électronique 28.

Un chemin optique est ainsi ménagé, dans chaque unité d'affichage 32 entre l'écran 38 et l'entrée 33 de l'unité d'affichage 32. Le chemin optique passe par le cadre 49 et l'oculaire 36 et permet à l'utilisateur 18 de visualiser l'image formée sur l'écran 38 avec un grossissement approprié permettant de visualiser l'entièreté de l'image sans avoir à bouger les yeux.

Avantageusement, l'armature 40 présente en outre un mécanisme de réglage dioptrique 74 permettant à l'utilisateur d'adapter la mise au point de chaque unité d'affichage 32.

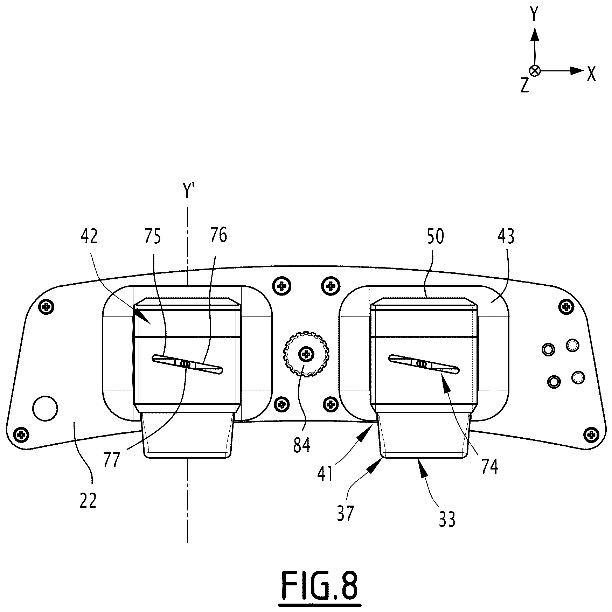

Le mécanisme de réglage dioptrique 74 visible sur la figure 8, permet d'ajuster la position de l'oculaire 36 dans la partie inférieure 42 selon la direction transversale Y. Ainsi, l'utilisateur 18 peut effectuer une mise au point sur chaque unité d'affichage 32 adaptée à chaque œil.

Dans l'exemple représenté, le mécanisme de réglage dioptrique 74 permet de déplacer transversalement le boîtier 51, recevant l'oculaire 36, par rapport à l'écran 38.

Dans cet exemple, le mécanisme de réglage dioptrique 74 comporte une rainure diagonale 75, une rainure latérale 76, et un pion de réglage 77 qui coopère avec la rainure diagonale 75 et la rainure latérale 76. La rainure diagonale 75 est une rainure traversante non parallèle à la direction latérale X et à la direction transversale Y et est ménagée dans la paroi de support 46. La rainure latérale 76 est ménagée dans une face du boîtier 51, et est parallèle à la direction latérale X. Le pion de réglage 77 est inséré dans la rainure latérale 76 et dans la rainure diagonale 75, de sorte à traverser la paroi de support 46. Le pion de réglage 77 est accessible par l'utilisateur 18 depuis l'extérieur de l'unité d'affichage 32. Le déplacement du pion de réglage 77 dans la rainure diagonale 75 génère une force selon la direction latérale X et la direction transversale Y. Comme le pion de réglage 77 est également inséré dans la rainure latérale 76, le pion de réglage 77 se déplace selon la direction latérale X et l'effort selon la direction transversale Y entraine le déplacement du boîtier 51 selon la direction transversale Y.

Avantageusement, l'ensemble d'affichage 14 comprend un mécanisme de réglage interpupillaire 78 propre à mettre en mouvement les deux unités d'affichage 32 selon la direction latérale X de manière synchrone. Le mécanisme de réglage interpupillaire 78 est destiné à régler l'écartement, pris selon la direction latérale X, entre les deux unités d'affichage 32 afin de s'adapter à la distance interpupillaire de l'utilisateur 18, c'est-à-dire à l'écartement entre ses yeux.

Dans l'exemple représenté, le mécanisme de réglage interpupillaire 78 est destiné à assurer la symétrie des unités d'affichages 32 par rapport à un plan de symétrie orthogonal à la direction latérale X.

De préférence, le mécanisme de réglage interpupillaire 78 assure également le parallélisme entre les unités d'affichages 32, en assurant que les unités d'affichage 32 affleurent sur un plan orthogonal à la direction transversale Y et/ou sur un plan orthogonal à la direction d'élévation Z lorsque les unités d'affichage 32 sont déplacées selon la direction latérale X.

Dans un exemple de réalisation représenté notamment sur la figure 4, les entrées 33 des unités d'affichage 32 sont ainsi comprises dans un même plan, notamment lors du déplacement des unités d'affichage 32 selon la direction latérale X par l'intermédiaire du mécanisme de réglage interpupillaire 78.

Le mécanisme de réglage interpupillaire 78 est monté sur la plaque de fermeture 22 du support 12.

En particulier, le mécanisme de réglage interpupillaire 78 est lié à la languette supérieure 41 de chaque unité d'affichage 32, permettant ainsi aux languettes de couvrir l'espace induit par le réglage interpupillaire de sorte à éviter l'entrée de lumière et de poussière.

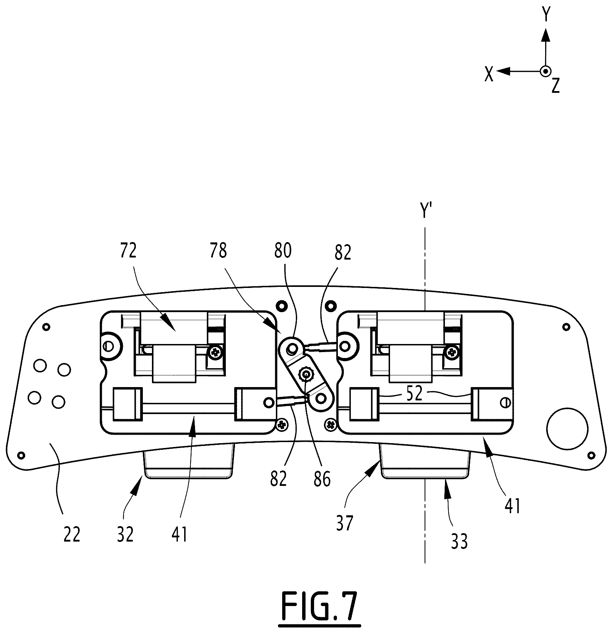

En référence à la figure 7, le mécanisme de réglage interpupillaire 78 comprend un palonnier 80, monté mobile en rotation selon un axe de palonnier parallèle à la direction d'élévation Z. Le palonnier 80 dispose de deux extrémités qui sont ménagés à équidistance de l'axe de rotation du palonnier 80.

Le palonnier 80 est lié en rotation, à chacune de ses extrémités, à une biellette 82. Chaque biellette 82 est montée mobile en rotation par rapport à la languette supérieure 41 de l'une des deux unités d'affichage 32.

La rotation du palonnier entraine le déplacement des biellettes 82 liées aux parties supérieures 41 des unités d'affichages 16. Le déplacement des biellettes 82 génère une force au niveau de l'insertion des biellettes 82 et des languettes supérieures 41, la force générée ayant au moins une composante selon la direction latérale X. Les parties supérieures 41 étant mobiles en translation par rapport au support 12 selon la direction latérale X, la rotation du palonnier 80 implique un déplacement symétrique des languettes supérieures 30, par rapport à l'axe de rotation du palonnier 80.

En outre, le mécanisme de réglage interpupillaire 78 peut être verrouillé, afin qu'un réglage interpupillaire qui convienne à l'utilisateur ne soit pas déréglé par inadvertance, par exemple en manipulant le dispositif de double vision 10.

Comme visible sur la figure 8, le mécanisme de réglage comprend une vis de verrouillage 83 dont la tête forme une molette de verrouillage 84, en liaison hélicoïdale par rapport à un écrou 86 du mécanisme de réglage. L'écrou 86 est disposé dans un logement adéquat du palonnier 80, visible notamment sur la figure 7, et la vis de verrouillage 83 fait office d'arbre pour la rotation du palonnier 80 par rapport au support 12.

La molette de verrouillage 84 est mobile en rotation entre une position déverrouillée, dans laquelle le palonnier 80 est mobile en rotation autour de l'axe de palonnier par rapport au support 12, et une position verrouillée dans laquelle le palonnier est immobile en rotation par rapport au support 12.

Dans la position verrouillée, la molette de verrouillage 84 est en appui sur la plaque de fermeture 22 du support 12, et la liaison boulonnée entre la vis de verrouillage 83 et l'écrou 86 génère une force de serrage selon la direction d'élévation Z qui bloque la rotation du palonnier 86 autour de l'axe de palonnier.

Dans la position déverrouillée, la molette de verrouillage n'est pas en appui sur la plaque de fermeture 22 du support 12, la liaison boulonnée n'appliquer pas de force de serrage sur le palonnier 80 dont la rotation autour de l'axe de palonnier est libre.

La molette de verrouillage 84 permet de verrouiller la distance entre les deux unités d'affichage 32 selon la direction latérale X, et donc de s'adapter à la distance interpupillaire de l'utilisateur.

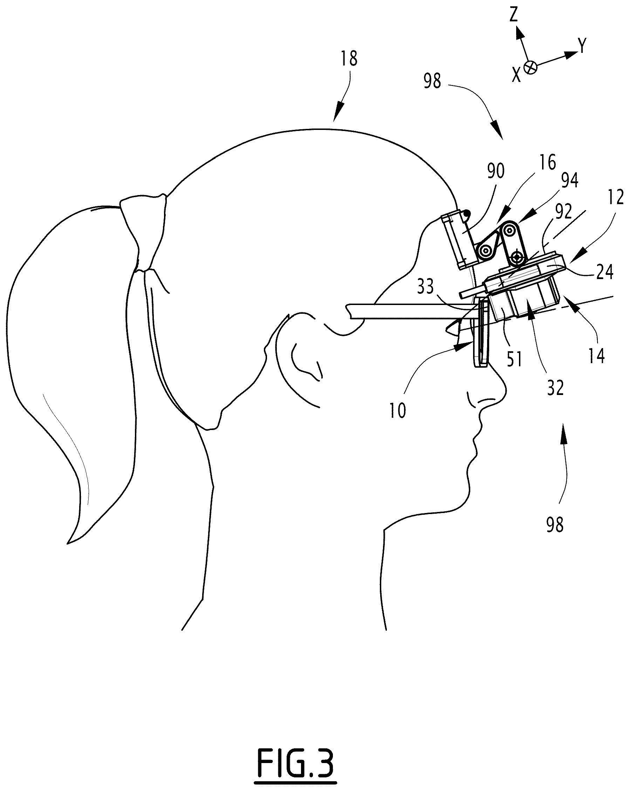

L'unité de réglage 16 est configurée pour fixer et adapter le support 12 à la tête de l'utilisateur 18 dans au moins une position de fonctionnement. Dans la au moins une position de fonctionnement, l'ensemble d'affichage 14 est situé dans la partie supérieure du champ de vision de l'utilisateur 18, à une latitude d'au moins 15°, tel que représenté sur la figure 3. Dans la au moins une position de fonctionnement du support 12, l'utilisateur peut visualiser des images, notamment du contenu vidéo, par l'intermédiaire des unités d'affichage 32 en levant les yeux.

La figure 2 représente un dispositif de double vision 10 dans lequel le support 12 est positionné relativement à un utilisateur dans une position de fonctionnement. L'utilisateur a accès à une seconde vision fournie par les deux unités d'affichage 32 et la distance entre les entrées 33 des unités d'affichage 32 et les yeux de l'utilisateur est assez importante pour y placer notamment des lunettes.

L'utilisateur représenté sur la figure 2 peut ainsi passer de la vision directe à la seconde vision pourvue par le dispositif de double vision 10 uniquement en levant les yeux, c'est-à-dire en orientant la direction de son axe optique à une latitude de 15°.

L'unité de réglage 16 est articulée afin de pouvoir régler la latitude du support 12 par rapport à l'utilisateur et/ou la distance des entrées 33 des unités d'affichage 32 aux yeux de l'utilisateur.

Dans un exemple de réalisation, l'unité de réglage 16 comprend une plaque d'attache 90, destinée à être positionnée sur le front de l'utilisateur, une plaque support 92 fixée au support 12, et un système d'articulation 94 reliant la plaque d'attache 90 et la plaque support 92. Le système d'articulation permet au moins un degré de liberté du support 12 dans un plan de profil orthogonal à la direction latérale X.

De préférence, l'unité de réglage 16 présente trois degrés de liberté dans le plan de profil P, notamment en étant articulée par trois liaisons pivots selon la direction latérale X, tel que représenté sur la figure 3. En variante l'unité de réglage 16 est articulée par deux liaisons pivots selon la direction latérale X.

La plaque d'attache 90 est munie d'un mécanisme de fixation (non représenté), permettant de rendre la plaque d'attache 90 solidaire de la tête de l'utilisateur 18. Le mécanisme de fixation comprend par exemple des bandes élastiques ou un casque.

En variante, la plaque d'attache 90 présente une autre forme, par exemple adaptée pour être positionnée sur un casque.

La figure 3 permet de visualiser le champ de vision de l'utilisateur portant le dispositif de double vision 10 en position de fonctionnement en fonction de la latitude. On distingue une zone de vision directe 98 dans laquelle l'utilisateur 18 voit de manière naturelle et une zone de vision obstruée 99 par le dispositif 10. La hauteur, prise selon la direction d'élévation Z, du support 12 et de l'ensemble d'affichage 14 est avantageusement inférieure à 50 mm, de préférence inférieure à 30 mm, pour garantir que la zone de vision obstruée 99 reste petite par rapport à la zone de vision directe 98.

En outre, tel qu'illustré sur la figure 4, la forme conique en entrée de chaque unité d'affichage 32 réduit la taille des zones de vision obstruée 99.

Un exemple de fonctionnement du dispositif de double vision 10 va maintenant être décrit.

Un utilisateur souhaitant utiliser le dispositif de double vision 10 positionne la plaque d'attache 90 de l'unité de réglage 16 sur son front et utilise le système de fixation pour rendre le dispositif de double vision 10 solidaire de sa tête. L'utilisateur adapte ensuite le support 12 du dispositif de vision, de sorte à positionner les unités d'affichage 32 en regard de ses yeux, en position de fonctionnement. Le support 12 se trouve alors en position supérieure du champ de vision de l'utilisateur, les unités d'affichage 32 se trouvant à la distance prédéterminée des yeux de l'utilisateur.

Consécutivement, l'utilisateur fournit un flux de données vidéo au dispositif de double vision 10 par l'intermédiaire du système de lecture de données de la carte électronique 28. Le flux de données vidéo lu par la carte électronique est alors retranscrit sur les écrans 38 des unités d'affichage 32.

L'utilisateur 18 souhaite ensuite régler la distance interpupillaire pour s'adapter à sa vision, il opère alors une rotation de la molette de verrouillage 84 pour la faire passer en position déverrouillée. L'utilisateur impose alors une force selon la direction latérale X et opère un déplacement des unités d'affichage selon la direction latérale X symétriquement à l'axe du palonnier. Une fois la distance interpupillaire correctement réglée, l'utilisateur fait passer la molette de verrouillage 84 en position verrouillée.

En levant les yeux vers les unités de réglage 32, l'utilisateur visualise le flux de données vidéo affiché sur les écrans 38.

Éventuellement, si l'image n'est pas visualisable clairement, l'utilisateur utilise le mécanisme de réglage dioptrique 74 pour régler la distance focale de l'oculaire 36 afin que l'image soit visualisable. L'utilisateur ferme alors un œil, et saisit le pion de réglage 77 pour déplacer l'oculaire 36 et effectuer la mise au point. Une fois la première unité d'affichage 32 réglée, l'utilisateur règle la deuxième unité d'affichage 32 de manière analogue.

Ainsi, le dispositif de double vision 10 permet à l'utilisateur 18 de passer d'une zone de vision directe à une zone de seconde vision, affichant le flux de données vidéo d'entrée, en regardant simplement dans la partie supérieure de son champ de vision.

De plus, le mécanisme de réglage interpupillaire 78 et le mécanisme de réglage dioptrique 74 rendent le dispositif de double vision 10 adaptable à un grand nombre d'utilisateurs.

Enfin, la distance entre les unités d'affichage 32 et les yeux de l'utilisateur 18 est assez grande pour que l'utilisateur 18 ait accès à la seconde vision tout en portant des lunettes.

Des précisions sur le dispositif présenté en figures 1 à 8 sont apportées dans les paragraphes ci-dessous.

Dans cet exemple, l'écran 38 et l'oculaire 36 sont alignés selon la direction transversale Y. Par « aligné », on entend qu'un axe Y' sensiblement parallèle à la direction transversale Y traverse le centre de l'écran 38 et de l'oculaire 36. Autrement dit, le chemin optique est sensiblement droit, ici parallèle à la direction transversale Y, à l'exception de la réfraction due au passage de la lumière d'un milieu à l'autre.

De préférence, l'écran 38 et l'oculaire 36 forment les seuls éléments du système optique de chaque unité d'affichage 32. Notamment, l'unité d'affichage 32 est dépourvue de miroirs ou de surfaces réfléchissantes.

Dans l'exemple représenté par exemple en figure 2, les unités d'affichages 16 s'étendent partiellement en saillie du support 12 selon la direction d'élévation Z.

En variante ou en complément, la profondeur d'une unité d'affichage 32, prise selon la direction transversale Y, est inférieure à 4 centimètres.

L'unité de réglage 16 selon l'invention est notamment dépourvue de branches latérales destinées à reposer sur les oreilles de l'utilisateur, ce qui facilite l'utilisation du dispositif 10 par un utilisateur porteur de lunettes.

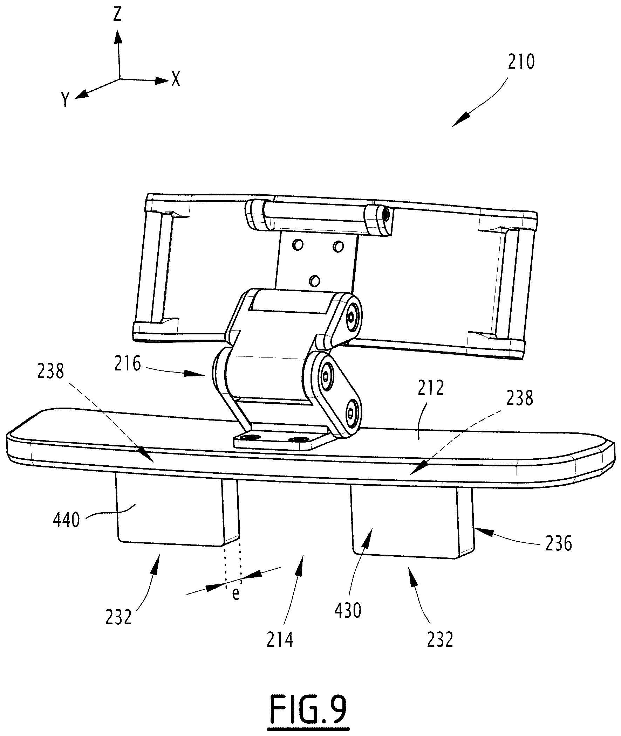

Un dispositif 210 de double vision correspondant à un deuxième mode de réalisation de l'invention va maintenant être décrit, en référence à la figure 9, par différence avec le mode de réalisation décrit précédemment. Les références concernant les mêmes éléments ont été incrémentées de 200.

Les unités d'affichage 232 présentent une portion saillante 430, s'étendant en saillie du support 212 selon la direction d'élévation Z, et une portion interne (non visible) située dans le support 212.

L'écran 238 de chaque unité d'affichage 232 est reçu dans la portion interne.

L'écran 238 est alors configuré pour projeter une image dans l'oculaire 236.

L'écran 238 et l'oculaire 236 sont configurés pour que l'image soit visualisable par l'utilisateur au travers de l'oculaire 236.

Par exemple, l'oculaire 236 comprend au moins une surface réfléchissante pour orienter le faisceau lumineux émis par l'écran 238 en direction des yeux de l'utilisateur.

L'oculaire 236 comprend de préférence par exemple un guide de lumière apte à faire circuler le faisceau lumineux, depuis une surface d'entrée, placée en regard de l'écran 238, jusqu'à l'entrée de l'oculaire 236, de sorte qu'il soit visualisable par l'utilisateur

Le guidage du faisceau lumineux par le guide de lumière de l'oculaire 236 se fait par exemple par diffraction ou par réflexion totale interne.

Ainsi, dans ce mode de réalisation, l'écran 238 et l'oculaire 236 ne sont pas alignés selon la direction transversale Y, mais mis l'un après l'autre selon la direction d'élévation Z, de sorte à guider le chemin optique depuis l'écran 238 vers l'oculaire 236 suivant la direction d'élévation Z, puis à le rediriger vers l'œil de l'utilisateur par exemple au moyen de la surface réfléchissante de l'oculaire 236.

De préférence, la profondeur, notée e et représentée en figure 9, de la portion saillante 430 de chaque unité d'affichage 232, prise selon la direction transversale Y, est inférieure ou égale à 5 millimètres, notamment inférieure ou égale à 4 millimètres.

De préférence, chaque unité d'affichage 232 est munie d'une cache électronique 440, pour rendre la seconde vision indépendante de la vision naturelle. Le cache électronique 440 est alors ménagé à l'opposé de l'entrée de l'oculaire 236 selon la direction transversale Y, et ferme l'unité d'affichage 232. Le cache électronique 440 est par exemple formé d'un écran à cristaux liquides monochrome.

L'homme du métier comprendra que les modes de réalisation et variantes précédemment décrits peuvent être combinés pour former de nouveaux modes de réalisation pourvu qu'ils soient compatibles techniquement.

## Revendications

1. Dispositif de double vision (10 ; 210) propre à générer, en plus de la vision directe d'un utilisateur (18), une seconde vision, indépendante de la vision directe, la seconde vision étant située en partie supérieure du champ de vision de l'utilisateur (18) de sorte que l'utilisateur (18) ait accès à la seconde vision seulement en levant les yeux, et ait accès à sa vision directe sinon, le dispositif comprenant :
- un support (12 ; 212) pour un ensemble d'affichage (14 ; 214),
- une unité de réglage (16 ; 216) propre à fixer et adapter le support (12 ; 212) à la tête de l'utilisateur (18) de sorte que l'ensemble d'affichage (14 ; 214) porté par le support (12 ; 212) soit visualisable seulement en partie supérieure du champ de vision de l'utilisateur (18 ; 218) lorsque l'utilisateur lève les yeux,
- l'ensemble d'affichage (14 ; 214) porté par le support (12 ; 212), l'ensemble d'affichage (14 ; 214) comprenant deux unités d'affichage (32 ; 232) propres à générer la seconde vision en partie supérieure du champ de vision de l'utilisateur, chaque unité d'affichage (32 ; 232) comprenant un oculaire (36) et un écran (38 ; 238) qui sont choisis de sorte que chaque unité d'affichage (32 ; 232) forme une image visualisable de manière nette par un œil distinct de l'utilisateur (18) dans les conditions suivantes :
• le support (12 ; 212) est incliné tel que l'image formée par chaque unité d'affichage (32 ; 232) soit visualisable seulement en partie supérieure du champ de vision de l'utilisateur (18) lorsque l'utilisateur lève les yeux, et
• la distance entre les yeux de l'utilisateur (18) et l'entrée des oculaires (36 ; 236) est supérieure ou égale à une distance prédéterminée, la distance prédéterminée étant choisie pour permettre l'insertion de lunettes entre les yeux de l'utilisateur (18) et l'unité d'affichage (32 ; 232).

2. Dispositif de double vision (10 ; 210) selon la revendication 1, dans lequel la distance prédéterminée est comprise est comprise entre 20 millimètres et 28 millimètres, de préférence entre 22 millimètres et 25 millimètres.

3. Dispositif de double vision (10) selon la revendication 1 ou 2, dans lequel l'écran (38) de chaque unité d'affichage (32) présente une taille choisie de sorte que l'image formée par l'unité d'affichage (32) soit lisible sans que l'utilisateur ait à bouger les yeux en latéral pour visualiser les bords de l'image.

4. Dispositif de double vision (10 ; 210) selon l'une quelconque des revendications 1 à 3, dans lequel chaque oculaire est formé d'un ensemble de lentilles (39) accolées, de préférence aux moins quatre lentilles accolées, la surface de la lentille en entrée de l'oculaire (36 ; 236) étant sensiblement plane.

5. Dispositif de double vision (10) selon l'une quelconque des revendications 1 à 4, dans lequel chaque unité d'affichage (32) comprend une armature (40) dans laquelle sont insérés l'écran (38) et l'oculaire (36), l'armature (40) présentant une forme parallélépipédique avec une base conique en entrée de l'oculaire (36).

6. Dispositif de double vision (10) selon l'une quelconque des revendications 1 à 5, dans lequel chaque unité d'affichage (32) comprend une armature (40) dans laquelle sont insérés l'écran (38) et l'oculaire (36), l'armature (40) présentant une bordure (37), en entrée de l'oculaire (36), dont l'épaisseur est inférieure ou égale à 2 millimètres, notamment inférieure ou égale à 1,4 millimètres.

7. Dispositif de double vision (10) selon l'une quelconque des revendications 1 à 6, dans lequel chaque unité d'affichage (32) comprend une armature (40) dans laquelle sont insérés l'écran (38) et l'oculaire (36), l'armature (40) présentant un mécanisme de réglage dioptrique (43) permettant à l'utilisateur d'adapter la mise au point de chaque unité d'affichage (32).

8. Dispositif de double vision (10) selon l'une quelconque des revendications 1 à 7, dans lequel le support comprend une plaque de fermeture (22) avec deux logements (29) dans lesquels sont reçus les unités d'affichage (32), l'ensemble d'affichage (14) comprenant un mécanisme de réglage interpupillaire (78) monté sur la plaque de fermeture (22) et propre à synchroniser le déplacement des deux unités d'affichages (32), le mécanisme de réglage interpupillaire (78) comprenant un palonnier (80) sur lequel sont montées deux biellettes (82) et une molette de verrouillage (84) de la rotation du palonnier (80), chaque biellette (82) étant fixée à une unité d'affichage (32) distincte permettant le déplacement synchrone de chaque unité d'affichage (32) lorsque la molette de verrouillage (84) est en position déverrouillée.

9. Dispositif de double vision (10) selon la revendication 8, dans lequel les deux unités d'affichages (32) comprennent également pour chaque logement deux languettes (41, 43) de part et d'autre de la plaque de fermeture (22) propres à couvrir l'espace induit par le réglage interpupillaire de sorte à éviter l'entrée de lumière et de poussière.

10. Dispositif de double vision (210) selon la revendication 1 ou 3, dans lequel l'unité d'affichage (232) comprend une portion interne à l'intérieur du support (212) et une portion saillante (430) s'étendant en saillie du support (212), et dans lequel l'écran (238) est reçu dans la portion interne, l'oculaire (236) étant reçu dans la portion saillante (430).

11. Dispositif de double vision (210) selon la revendication 10, dans lequel la portion saillante (430) de l'unité d'affichage (232) présente une épaisseur (e) inférieure ou égale à 4 millimètres.

12. Procédé de génération d'une seconde vision, indépendante de la vision directe d'un utilisateur (18), la seconde vision étant située en partie supérieure du champ de vision de l'utilisateur (18) de sorte que l'utilisateur (18) ait accès à la seconde vision seulement en levant les yeux, et ait accès à sa vision directe sinon, le procédé étant mis en œuvre par un dispositif de double vision (10 ; 210) selon l'une quelconque des revendications 1 à 11, le procédé comprenant les étapes suivantes :
- la fixation et l'adaptation du support (10) du dispositif de double vision (10 ; 210) à la tête de l'utilisateur de sorte que l'ensemble d'affichage(14 ; 214) porté par le support (12 ; 212) soit visualisable seulement en partie supérieure du champ de vision de l'utilisateur lorsque l'utilisateur lève les yeux, et
- la visualisation par l'utilisateur de la seconde vision fournie par le dispositif de double vision (10 ; 210) en partie supérieure du champ de vision de l'utilisateur lorsque l'utilisateur lève les yeux, et de sa vision directe sinon.
